(19) **Europäisches Patentamt / European Patent Office / Office européen des brevets**

(11) **EP 4 567 369 A1**

(12) **EUROPEAN PATENT APPLICATION**
published in accordance with Art. 153(4) EPC

(43) Date of publication:
**11.06.2025 Bulletin 2025/24**

(21) Application number: **23850009.4**

(22) Date of filing: **28.07.2023**

(51) International Patent Classification (IPC):
**G01B 7/16** (2006.01)

(52) Cooperative Patent Classification (CPC):
**G01B 7/16**

(86) International application number:
**PCT/JP2023/027714**

(87) International publication number:
**WO 2024/029454 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.08.2022 JP 2022123522**

(71) Applicant: **Minebea Mitsumi Inc.**
**Kitasaku-gun, Nagano 3890293 (JP)**

(72) Inventors:
• **TODA, Shinya**
**Kitasaku-gun, Nagano 389-0293 (JP)**
• **ASAKAWA, Toshiaki**
**Kitasaku-gun, Nagano 389-0293 (JP)**
• **KITAMURA, Atsushi**
**Kitasaku-gun, Nagano 389-0293 (JP)**
• **NIWA, Shinichi**
**Kitasaku-gun, Nagano 389-0293 (JP)**

(74) Representative: **Winter, Brandl - Partnerschaft mbB**
**Alois-Steinecker-Straße 22**
**85354 Freising (DE)**

(54) **STRAIN GAUGE**

(57) The present strain gauge includes a substrate and a resistor formed on the substrate. The resistor is made of a material mainly composed of Cr. A film thickness of the resistor is 200 nm or greater such that the strain gauge has a transverse sensitivity ratio of 70% or less and a gauge factor of 5 or greater.

## FIG.5

EP 4 567 369 A1

**Description**

TECHNICAL FIELD

The present invention relates to a strain gauge.

BACKGROUND ART

Strain gauges used while being pasted on a measurement target have been known. The gauge factor of strain gauges is typically approximately 2, but some strain gauges that include resistors containing Cr as a main component has a gauge factor of approximately 10 (for example, see PTL 1).
Strain gauges including resistors containing Cr as a main component not only have a high axial sensitivity, which is a sensitivity in the main axial direction, but also have as high a transverse sensitivity as the axial sensitivity as a sensitivity in a direction perpendicular to the main axial direction. This characteristic is said to be not dependent on the shape of the resistor (see NPL 1).

CITATION LIST

PATENT LITERATURE

PTL 1: Japanese Patent No. 6084393

NON-PATENT LITERATURE

NPL 1: Isotropy of Gauge Factor on Cr-N Thin Films for Strain Sensors, The institute of Electrical engineers of Japan, 2013 National Competition, Lecture Paper Collection 3 (2013):240-241

SUMMARY OF THE INVENTION

TECHNICAL PROBLEM

However, although a high gauge factor is preferable for strain detection by a strain gauge, a detection error may occur when a transverse sensitivity ratio, which is the ratio of the transverse sensitivity to the axial sensitivity, is high. Therefore, a strain gauge that has a gauge factor greater than the existing gauge factor (approximately 2) yet has a small transverse sensitivity ratio is demanded.
The present invention was made in view of the point described above, and an object of the present invention is to provide a strain gauge that has a gauge factor greater than that of existing strain gauges yet has a small transverse sensitivity ratio.

SOLUTION TO THE PROBLEM

A strain gauge according to an embodiment of the present disclosure includes a substrate, and a resistor formed on the substrate. The resistor is made of a material mainly composed of Cr. A film thickness of the resistor is 200 nm or greater such that the strain gauge has a transverse sensitivity ratio of 70% or less and a gauge factor of 5 or greater.

ADVANTAGEOUS EFFECTS OF THE INVENTION

The disclosed technique can provide a strain gauge that has a gauge factor greater than that of existing strain gauges yet has a small transverse sensitivity ratio.

BRIEF DESCRIPTION OF THE DRAWINGS

[FIG. 1] FIG. 1 is a plan view illustrating an example of a strain gauge according to a first embodiment.
[FIG. 2] FIG. 2 is a cross-sectional view (part 1) illustrating an example of the strain gauge according to the first embodiment.
[FIG. 3] FIG. 3 is a cross-sectional view (part 2) illustrating an example of the strain gauge according to the first embodiment.

[FIG. 4] FIG. 4 is a view illustrating a transverse sensitivity ratio.

[FIG. 5] FIG. 5 is a drawing illustrating a result of consideration in Example 1.

[FIG. 6] FIG. 6 is a drawing illustrating a result of consideration in Example 2.

DETAILED DESCRIPTION OF THE INVENTION

Hereinafter, embodiments for carrying out the invention will be described with reference to the drawings. In each drawing, the same components may be denoted by the same numerals.

<First Embodiment>

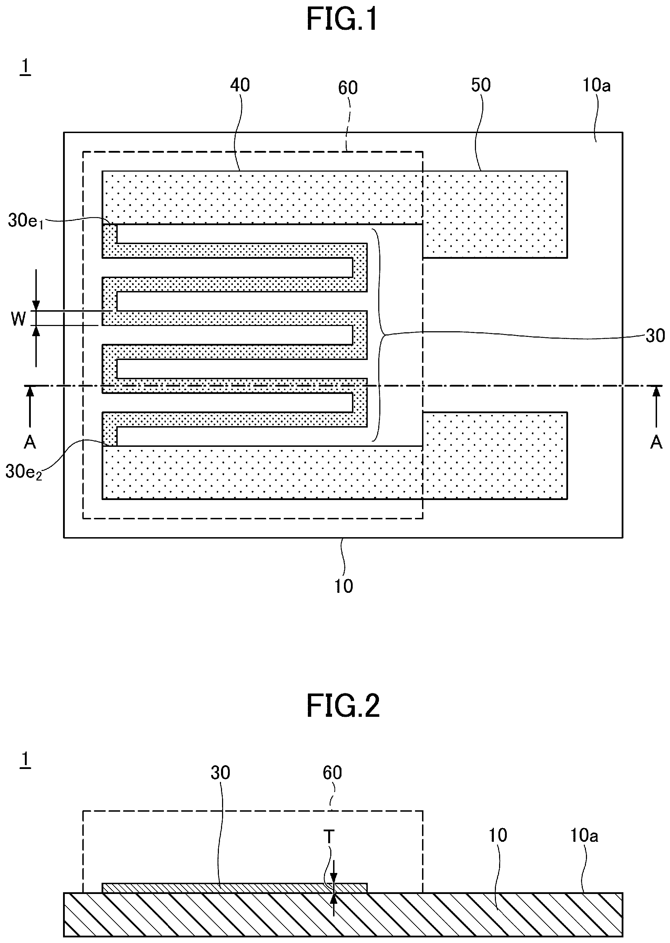

FIG. 1 is a plan view illustrating a strain gauge according to a first embodiment. FIG. 2 is a cross-sectional view (part 1) illustrating the strain gauge according to the first embodiment, and is a cross-sectional view taken along the line A-A in FIG. 1.

Referring to FIGS. 1 and 2, a strain gauge 1 includes a substrate 10, a resistor 30, lines 40, electrodes 50, and a cover layer 60. The cover layer 60 can be provided as needed. In FIGS. 1 and 2, only an outer edge of the cover layer 60 is indicated by a broken line for convenience. Components constituting the strain gauge 1 will be described in detail as follows.

In the present embodiment, for convenience, a side of the strain gauge 1 where the resistor 30 of the substrate 10 is provided will be referred to as an "upper side," and a side of the strain gauge 1 where the resistor 30 is not provided will be referred to as a "lower side." Further, a surface located on the upper side of each component will be referred to as an "upper surface," and a surface located on the lower side of each component will be referred to as a "lower surface." However, the strain gauge 1 can be used in a state of being upside down. The strain gauge 1 can be also arranged at an arbitrary angle. A plan view refers to viewing an object in a direction that is normal to an upper surface 10a of the substrate 10 and that is from the upper side to the lower side. A plan shape refers to a shape of an object when the object is viewed in the above normal direction.

The substrate 10 serves as a base layer for forming the resistor 30 and the like. The substrate 10 is flexible. The thickness of the substrate 10 is not particularly limited, and may be suitably determined according to the purpose or the like of use of the strain gauge 1. For example, the thickness of the substrate 10 may be approximately 5 $\mu$m to 500 $\mu$m. A flexure element may be bonded to the lower surface of the strain gauge 1 via an adhesive layer or the like. In view of the transmissibility of strain from a flexure element surface to a sensitive portion and of dimensional stability against environmental changes, the thickness of the substrate 10 is preferably in the range of 5 $\mu$m to 200 $\mu$m. In view of the insulation, the thickness of the substrate 10 is preferably 10 $\mu$m or more.

The substrate 10 is formed of, for example, an insulating resin film such as a polyimide (PI) resin, an epoxy resin, a polyetheretherketone (PEEK) resin, a polyethylene naphthalate (PEN) resin, a polyethylene terephthalate (PET) resin, a polyphenylene sulfide (PPS) resin, a liquid crystal polymer (LCP) resin, a polyolefin resin, or the like. The film refers to a flexible member having a thickness of about 500 $\mu$m or less.

When the substrate 10 is formed of an insulating resin film, the insulating resin film may contain fillers, impurities, or the like. For example, the substrate 10 may be formed of an insulating resin film containing fillers such as silica and alumina.

Examples of the material other than the resin of the substrate 10 include crystalline materials such as $SiO_2$, $ZrO_2$ (including YSZ), Si, $Si_2N_3$, $Al_2O_3$ (including sapphire), ZnO, and perovskite ceramics ($CaTiO_3$ and $BaTiO_3$). In addition to the crystalline materials described above, amorphous glass or the like may be used as the material of the substrate 10. As the material of the substrate 10, a metal such as aluminum, an aluminum alloy (duralumin), stainless steel, or titanium may be used. When the metal is used, an insulating film is provided so as to cover an upper surface and a lower surface of the substrate 10 made of a metal.

The resistor 30 is a thin film formed in a predetermined pattern on the upper side of the substrate 10. In the strain gauge 1, the resistor 30 is a sensitive portion of which resistance changes upon receiving strain. The resistor 30 may be formed directly on the upper surface 10a of the substrate 10, or may be formed on the upper surface 10a of the substrate 10 via other layer(s). In FIG. 1, the resistor 30 is illustrated in a pearskin finish pattern having a high density for convenience.

The resistor 30 includes a plurality of elongated portions and a plurality of turning portions. In the resistor 30, the plurality of elongated portions, whose longitudinal direction is aligned in the same direction, are arranged side by side. The plurality of turning portions connect the elongated portions in series by joining ends of adjoining elongated portions of the plurality of elongated portions at alternate sides. As a result, the resistor 30 has a zigzag-turnaround structure as a whole. The longitudinal direction of the plurality of elongated portions is a grid direction, and a direction perpendicular to the grid direction is a grid width direction.

Ends, on a longitudinal-direction one side, of two elongated portions that are positioned on the outermost sides in the grid width direction are bent in the grid width direction and form ends $30e_1$ and $30e_2$ of the resistor 30 in the grid width direction. The ends $30e_1$ and $30e_2$ of the resistor 30 in the grid width direction are electrically connected to electrodes 50 through lines 40. In other words, the lines 40 electrically connect the ends $30e_1$ and $30e_2$ of the resistor 30 in the grid width direction to the electrodes 50.

The gauge factor of the strain gauge 1 is preferably 5 or greater. The gauge factor of the strain gauge 1 is not dependent on the film thickness T of the resistor 30. When it is said that the gauge factor is not dependent on the film thickness T of the resistor 30, it is meant that the difference between the maximum value and the minimum value of the gauge factor in a range of the film thickness T of the resistor 30 of 30 nm or greater and 800 nm or less is 2 or less.

The transverse sensitivity ratio of the strain gauge 1 has a negative correlation with the film thickness T of the resistor 30, and decreases as the film thickness T of the resistor 30 increases. The definition of the transverse sensitivity ratio and the relationship between the film thickness T of the resistor 30, and the gauge factor and the transverse sensitivity ratio will be described in detail separately.

The strain limit has a negative correlation with the film thickness T of the resistor 30, and decreases as the film thickness T of the resistor 30 increases. The strain limit represents a mechanical strain value at which a crack, or breakage of a line or wire begins to occur when strain is applied to the strain gauge. The relationship between the film thickness T of the resistor 30 and the strain limit will be described in detail separately.

The line width W of the resistor 30 can be, for example, approximately 0.1 $\mu$m or greater and 100 $\mu$m or less, in order to be optimized with respect to the required specifications such as resistance value, transverse sensitivity, and the like, and in consideration of the countermeasure for line breakage. The line width W of the resistor 30 is preferably 70 $\mu$m or less, more preferably 20 $\mu$m or less, more preferably 10 $\mu$m or less, and particularly preferably 5 $\mu$m or less. With the present processing technology, the line width W of the resistor 30 can be reduced to at least 0.1 $\mu$m.

The resistor 30 can be formed of, for example, a material mainly composed of Cr (chromium) as a main component. Here, "main component" means a component that accounts for 50 wt.% or more of all materials constituting the resistor 30. An example of a material mainly composed of Cr is a Cr mixed phase film. The Cr mixed phase film is a film in which Cr, CrN, $Cr_2N$, and the like are mixed. The Cr mixed phase film may contain unavoidable impurities such as chromium oxide and the like.

For example, when the resistor 30 is a Cr mixed phase film, the stability of the gauge characteristics can be improved by using $\alpha$-Cr (alpha chromium), which has a stable crystal phase, as a main component. For example, when the resistor 30 is the Cr mixed phase film, in a case where the resistor 30 is formed with $\alpha$-Cr as the main component, the gauge factor of the strain gauge 1 can be set to 10 or greater, and a gauge factor temperature coefficient TCS and a temperature coefficient of resistance TCR can be each set to be in the range of -1,000 ppm/°C to +1,000 ppm/°C. From the viewpoint of improving the gauge factor, the resistor 30 preferably includes $\alpha$-Cr at 80 wt.% or more. Further, from this viewpoint, it is more preferable that the resistor 30 includes $\alpha$-Cr at 90 wt.% or more. The $\alpha$-Cr is Cr having a bcc structure (body-centered cubic lattice structure).

When the resistor 30 is the Cr mixed phase film, CrN and $Cr_2N$ included in the Cr mixed phase film are preferably at 20 wt.% or less. When CrN and $Cr_2N$ included in the Cr mixed phase film are at 20 wt.% or less, it is possible to suppress the decrease in the gauge factor of the strain gauge 1.

Regarding the ratio between CrN and $Cr_2N$ in the Cr mixed phase film, it is preferable that a ratio of $Cr_2N$ is greater than or equal to 80 wt.% and less than 90 wt.% with respect to a total weight of CrN and $Cr_2N$. More preferably, regarding this ratio, a ratio of $Cr_2N$ is greater than or equal to 90 wt.% and less than 95 wt.% with respect to the total weight of CrN and $Cr_2N$. $Cr_2N$ has a semiconductor characteristic. Therefore, when a percentage of $Cr_2N$ is greater than or equal to 90 wt.% and less than 95 wt.%, a decrease in TCR (negative TCR) becomes more remarkable. In addition, when the percentage of $Cr_2N$ is greater than or equal to 90 wt.% and less than 95 wt.%, a ceramic portion of the resistor 30 is reduced, and a brittle fracture of the resistor 30 is unlikely to occur.

On the other hand, CrN has an advantage of being chemically stable. By including more CrN in the Cr mixed phase film, it is possible to reduce the possibility of generating unstable N, so that a stable strain gauge can be obtained. Here, the "unstable N" means a small amount of $N_2$ or atomic N that may exist in the film of the Cr mixed phase film. The unstable N may escape out of the film depending on an external environment (for example, a high temperature environment). When the unstable N escapes out of the film, film stress on the Cr mixed phase film may change.

When the Cr mixed phase film is used as the material of the resistor 30 in the strain gauge 1, high sensitivity can be provided and the strain gauge 1 can be made compact. For example, while an output of a conventional strain gauge is about 0.04 mV/2 V, an output of 0.3 mV/2 V or more can be obtained in a case where the Cr mixed phase film is used as the material of the resistor 30. In addition, while the size (gauge length $\times$ gauge width) of the conventional strain gauge is about 3 mm $\times$ 3 mm, the size (gauge length $\times$ gauge width) of the strain gauge can be reduced to about 0.3 mm $\times$ 0.3 mm in a case where the Cr mixed phase film is used as the material of the resistor 30.

The lines 40 are provided on the substrate 10. One end side of the lines 40 is electrically connected to both ends of the resistor 30, and the other end side thereof is electrically connected to the electrodes 50. The lines 40 are not limited to a straight-line shape, and may be any pattern. The lines 40 may have any width and any length. In FIG. 1, the lines 40 are illustrated in a pearskin finish pattern having a density less than that of the resistor 30 for convenience.

The electrodes 50 are provided on the substrate 10. The electrodes 50 are electrically connected to the resistor 30 through the lines 40. In a plan view, the electrodes 50 are formed in approximately a rectangular shape having a width greater than that of the lines 40. The electrodes 50 are a pair of electrodes for outputting a change in the resistance value of the resistor 30 caused by strain to outside. For example, lead wires or the like for external connection are joined to the electrodes 50. A metal layer having a low resistance such as copper or the like, or a metal layer having a good soldering property such as gold or the like may be laminated on the upper surface of the electrodes 50. For convenience, the resistor 30, and the lines 40 and the electrodes 50 are denoted by different numerals. However, both may be formed integrally from the same material in the same step. In FIG. 1, the electrodes 50 are illustrated in a pearskin finish pattern having the same density as that of the lines 40 for convenience.

The cover layer 60 is provided on the upper surface 10a of the substrate 10 as necessary, so as to cover the resistor 30 and the lines 40 and expose the electrodes 50. The material of the cover layer 60 may include, for example, an insulating resin, such as a PI resin, an epoxy resin, a PEEK resin, a PEN resin, a PET resin, a PPS resin, or a composite resin (for example, a silicone resin or a polyolefin resin). The cover layer 60 may contain fillers or pigments. The thickness of the cover layer 60 is not particularly limited and can be suitably selected according to the purpose. For example, the thickness of the cover layer 60 may be approximately 2 $\mu$m to 30 $\mu$m. By providing the cover layer 60, the occurrence of mechanical damage or the like to the resistor 30 can be suppressed. Further, by providing the cover layer 60, the resistor 30 can be protected from moisture or the like.

[Method for Manufacturing Strain Gauge]

In the strain gauge 1 according to the present embodiment, the resistor 30, the lines 40, the electrodes 50, and the cover layer 60 are formed on the substrate 10. Another layer (the functional layer described below, or the like) may be formed between the substrate 10 and layers of the above components.

Hereinafter, the method for manufacturing the strain gauge 1 will be described. In order to manufacture the strain gauge 1, first, the substrate 10 is prepared, and a metal layer (for convenience, referred to as a metal layer A) is formed on the upper surface 10a of the substrate 10. The metal layer A is a layer that is ultimately patterned to serve as the resistor 30, the lines 40, and the electrodes 50. Thus, the material and thickness of the metal layer A are the same as those of the above resistor 30 and the like.

The metal layer A can be formed, for example, by magnetron sputtering that uses a raw material capable of forming the metal layer A as a target. Instead of magnetron sputtering, the metal layer A may be formed by reactive sputtering, vapor deposition, arc ion plating, pulsed laser deposition, or the like. When forming the metal layer A, the thickness of the metal layer A can be adjusted to a desired value.

After the metal layer A is formed on the upper surface 10a of the substrate 10, the metal layer A is patterned into the same planar shape as that of the resistor 30, the lines 40, and the electrodes 50 illustrated in FIG. 1 by a publicly-known photolithography. During patterning by photolithography, the line width of the resistor 30 can be adjusted to a desired value. The resistor 30 includes the plurality of elongated portions arranged side by side, and turning portions that connect the elongated portions in series by joining ends of adjoining elongated portions of the plurality of elongated portions on alternate sides.

The metal layer A may be formed after forming a base layer on the upper surface 10a of the substrate 10. For example, a functional layer having a predetermined film thickness may be vacuum-deposited on the upper surface 10a of the substrate 10 by conventional sputtering. By providing the base layer in this manner, gauge characteristics of the strain gauge 1 can be stabilized.

In the present application, the functional layer refers to a layer having a function of promoting crystal growth of at least an upper metal layer A (resistor 30). Preferably, the functional layer further has either or both of a function of preventing oxidation of the metal layer A due to oxygen or moisture contained in the substrate 10 and a function of improving adhesion between the substrate 10 and the metal layer A. The functional layer may further have other functions.

The insulating resin film that constitutes the substrate 10 may contain oxygen or moisture, and Cr may form an autoxidized film. Therefore, especially when the metal layer A includes Cr, it is preferable to deposit a functional layer having a function of preventing oxidation of the metal layer A.

By providing the functional layer under the metal layer A, crystal growth of the metal layer A can be promoted, and the metal layer A having a stable crystal phase can be produced. As a result, the stability of the gauge characteristics is improved in the strain gauge 1. Moreover, the gauge characteristics are improved in the strain gauge 1 by diffusion of a material that is a constituent of the functional layer into the metal layer A.

The material of the functional layer may include, for example, one or more metals selected from the group consisting of Cr (chromium), Ti (titanium), V (vanadium), Nb (niobium), Ta (tantalum), Ni (nickel), Y (yttrium), Zr (zirconium), Hf (hafnium), Si (silicon), C (carbon), Zn (zinc), Cu (copper), Bi (bismuth), Fe (iron), Mo (molybdenum), W (tungsten), Ru (ruthenium), Rh (rhodium), Re (rhenium), Os (osmium), Ir (iridium), Pt (platinum), Pd (palladium, Ag (silver), Au (gold), Co (cobalt), Mn (manganese), and Al (aluminum); an alloy of any metals among the group; or a compound of any metal among the group.

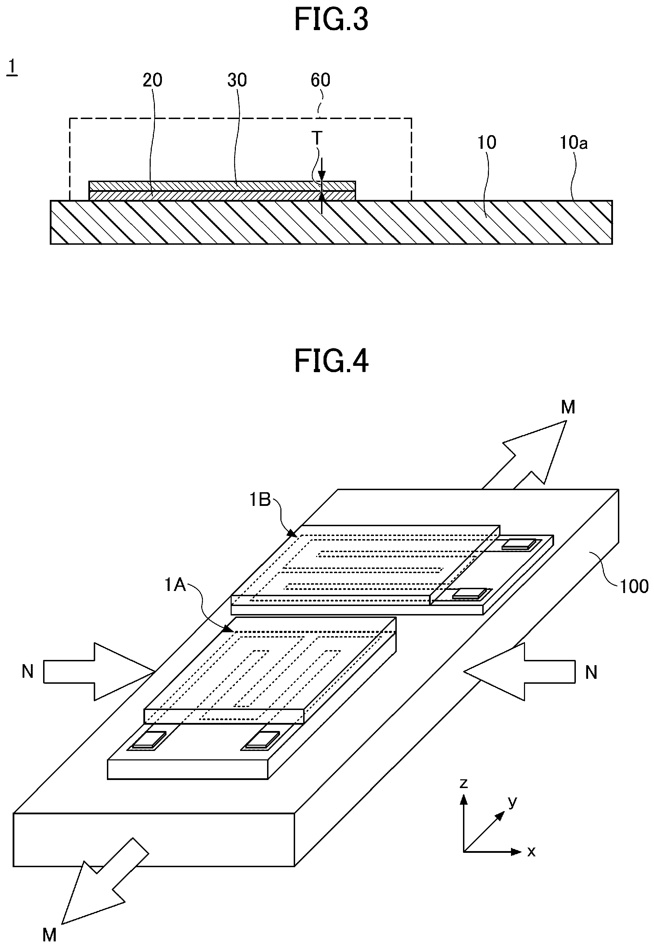

FIG. 3 is a cross-sectional view (part 2) illustrating the strain gauge according to the first embodiment. FIG. 3 shows a cross-sectional shape of the strain gauge 1 when a functional layer 20 is provided as an underlayer of the resistor 30, the lines 40, and the electrodes 50.

The planar shape of the functional layer 20 may be patterned to be substantially the same as the planar shape of the resistor 30, the lines 40, and the electrodes 50, for example. However, the planar shape of the functional layer 20 does not need to be substantially the same as the planar shape of the resistor 30, the lines 40, and the electrodes 50. For example, when the functional layer 20 is formed of an insulating material, the functional layer 20 may be patterned to have a shape different from the planar shape of the resistor 30, the lines 40, and the electrodes 50. In this case, the functional layer 20 may be formed in a solid shape in a region where the resistor 30, the lines 40, and the electrodes 50 are formed, for example. Alternatively, the functional layer 20 may be solidly formed on the entire upper surface of the substrate 10.

After the resistor 30, the lines 40, and the electrodes 50 are formed, the cover layer 60 is formed on the upper surface 10a of the substrate 10 as necessary. The cover layer 60 covers the resistor 30 and the lines 40, but the electrodes 50 may be exposed from the cover layer 60. For example, the cover layer 60 can be formed by: laminating a semi-cured thermosetting insulating resin film on the upper surface 10a of the substrate 10 so as to cover the resistor 30 and the lines 40 and expose the electrodes 50; and then heating and curing the insulating resin film. Through the above process, the strain gauge 1 is completed.

[Reduction in Transverse Sensitivity Ratio]

The transverse sensitivity ratio will be described. FIG. 4 is a view illustrating the transverse sensitivity ratio. In FIG. 4, the axis M indicates the direction in which it is desired to measure strain. In FIG. 4, a strain gauge 1A, of which the grid direction is aligned with the direction of the axis M, and a strain gauge 1B, of which the grid direction is aligned with the direction perpendicular to the axis M are pasted on a flexure element 100. The x-axis, the y-axis, and the z axis of FIG. 4 indicate axes orthogonal to one another. The axis M is parallel with the y-axis, and the direction perpendicular to the axis M is parallel with the x-axis.

In FIG. 4, when a tensile strain occurs in the direction of the axis M, the resistor of the strain gauge 1A extends in the direction of the axis M, and the resistor of the strain gauge 1B contracts in the direction perpendicular to the axis M based on the Poisson coefficient. The arrow N of FIG. 4 indicates the direction of contraction based on the Poisson coefficient.

Here, when the sensitivity to a strain that occurs in the direction of the axis M is defined as the axial sensitivity $F_a$, and the sensitivity to a strain that occurs in the direction perpendicular to the axis M is defined as the transverse sensitivity $F_t$, an equation (1) and an equation (2) are established. The transverse sensitivity ratio K, which is defined as the ratio of the transverse sensitivity $F_t$ to the axial sensitivity $F_a$, is expressed by an equation (3).

In the equations (1) and (2), $\varepsilon_y$ represents a strain that occurs in the direction of the axis M, and $\varepsilon_x$ represents a strain that occurs in the direction perpendicular to the axis M. $R_A$ represents a resistance value of the resistor of the strain gauge 1A when no strain occurs. $R_B$ represents a resistance value of the resistor of the strain gauge 1B when no strain occurs. $\Delta R_A$ represents a resistance value change that occurs in the resistor of the strain gauge 1A when the strains $\varepsilon_x$ and $\varepsilon_y$ occur. $\Delta R_B$ represents a resistance value change that occurs in the resistor of the strain gauge 1B when the strains $\varepsilon_x$ and $\varepsilon_y$ occur.

$$\Delta R_A / R_A = F_a \, \varepsilon_y + F_t \, \varepsilon_x \qquad \cdots (1)$$

$$\Delta R_B / R_B = F_t \, \varepsilon_y + F_a \, \varepsilon_x \qquad \cdots (2)$$

$$K = F_t / F_a \qquad \cdots (3)$$

When a bridge circuit is formed using commercially available strain gauges, the amount of output change is typically approximately 0.10 mV/V. In order to enable an amount of output change that is equal to or greater than that of commercially available strain gauges, the transverse sensitivity ratio may be 70% or less, and the gauge factor may be 5 or greater.

The transverse sensitivity ratio is more preferably 50% or less, yet more preferably 40% or less, and particularly preferably 30% or less. The gauge factor is more preferably 8 or greater, more preferably 11 or greater, and particularly preferably 14 or greater. The less the transverse sensitivity ratio and the greater the gauge factor, the more the amount of output change can be increased when a bridge circuit is formed by strain gauges.

Examples will be described below. The present invention should not be construed as being limited to the following Examples.

[Example 1]

The inventors manufactured strain gauge samples, and investigated the relationship between the film thickness of the resistor, and the transverse sensitivity ratio and the gauge factor.

First, a Ti film having a film thickness of 3 nm was vacuum-deposited as the functional layer 20 on the upper surface 10a of the substrate 10 made of a polyimide resin and having a thickness of 25 $\mu$m by conventional sputtering. Next, a Cr mixed phase film having a film thickness of 800 nm was deposited on the entire upper surface of the functional layer 20 as the resistor 30, the lines 40, and the electrodes 50 by magnetron sputtering. Then, the functional layer 20, the resistor 30, the lines 40, and the electrodes 50 were patterned as illustrated in FIG. 1 by photolithography, to manufacture a strain gauge sample. In this sample, the resistor 30 was patterned to have a line width W of 50 $\mu$m.

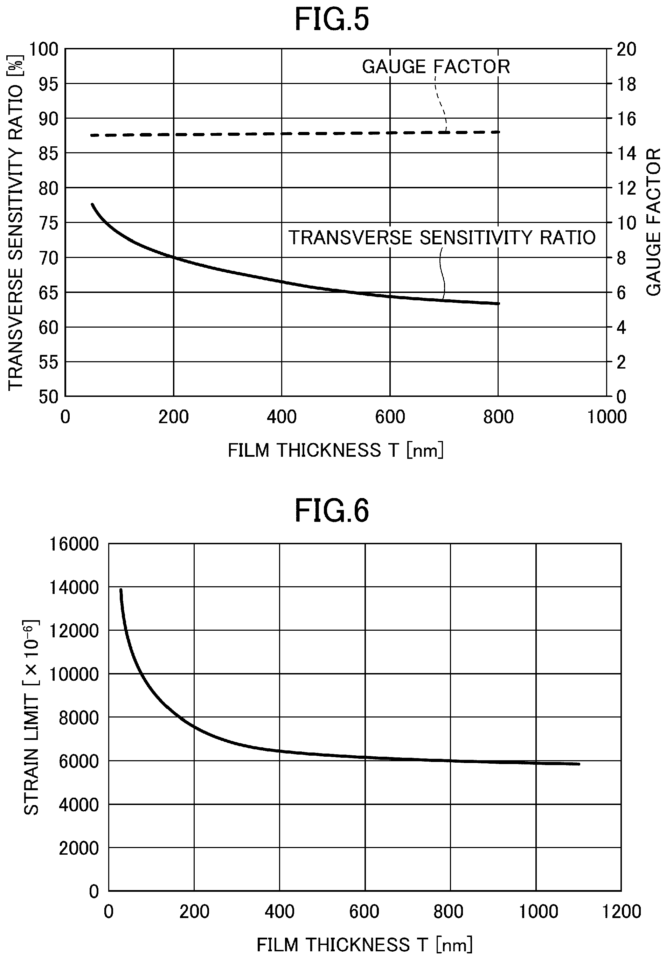

Next, by the same method, strain gauge samples were manufactured such that the film thickness T of the resistor 30 would be 500 nm, 200 nm, 100 nm, 50 nm, and 30 nm, respectively. The transverse sensitivity ratio and the gauge factor of each strain gauge sample were measured in a 20°C environment, and are collectively indicated in FIG. 5.

As shown in FIG. 5, the gauge factor of the manufactured samples is not dependent on the film thickness T of the resistor 30. In FIG. 5, the difference between the maximum value and the minimum value of the gauge factor with respect to change in the film thickness T of the resistor 30 is approximately 1.5. On the other hand, the transverse sensitivity ratio has a negative correlation with the film thickness T of the resistor 30, and tends to decrease as the film thickness T of the resistor 30 increases.

In FIG. 5, the gauge factor is approximately 15, but it has been confirmed that samples with various gauge factors of 5 or greater exhibited the same characteristics as those in FIG. 5, although illustration and the like are omitted.

From these results, it was found that it is possible to make the transverse sensitivity ratio small while maintaining a high gauge factor, by forming the resistor 30 from a material containing Cr as a main component and making the film thickness T of the resistor 30 thick. That is, it was found that it is possible to realize a strain gauge having a gauge factor greater than that of existing strain gauges and having a small transverse sensitivity ratio, by forming the resistor 30 from a material containing Cr as a main component and controlling the film thickness T of the resistor. By making the transverse sensitivity ratio small while maintaining a high gauge factor, it is possible to improve the accuracy of strain detection.

As described above, when the transverse sensitivity ratio is 70% or less, an amount of output change that is equal to or greater than that of a commercially available strain gauge can be obtained. Here, as illustrated in FIG. 5, at a film thickness T of the resistor 30 of 200 nm or greater, the transverse sensitivity ratio can be 70% or less. In other words, it is possible to realize a strain gauge in which the film thickness of the resistor 30 is adjusted to 200 nm or greater such that the strain gauge has a transverse sensitivity ratio of 70% or less and a gauge factor of 5 or greater.

In order to obtain an amount of output change that is equal to or greater than that of a commercially available strain gauge, the gauge factor may be 5 or greater. However, the gauge factor of each sample using a Cr mixed phase film as the resistor 30 was 14 or greater, and a sufficiently great value was obtained. Even when a Cr mixed phase film is used as the resistor 30, it is possible to adjust the gauge factor to various values equal to or greater than 5 by changing the $\alpha$-Cr content in the resistor 30. Moreover, when a Cr mixed phase film is used as the resistor 30 and the crystallinity of $\alpha$-Cr is increased, the gauge factor becomes 5 or greater and 10 or less.

Thus, by forming the resistor 30 from a material containing Cr as a main component, it is possible to realize a strain gauge having a gauge factor that is 5 or greater and is not dependent on the film thickness of the resistor 30, and having a transverse sensitivity ratio that has a negative correlation with the film thickness of the resistor 30 and decreases as the film thickness of the resistor 30 increases.

Although a polyimide resin was used as the substrate 10 in Example 1, the characteristics shown in FIG. 5 are not dependent on the material of the substrate 10. For example, when a material other than resins is used as the substrate 10, the same characteristics as in FIG. 5 can be obtained.

Moreover, also when any material other than Cr mixed phase film is used instead, a gauge factor of 5 or greater can be obtained. Examples of materials that can obtain a gauge factor of 5 or greater include Ge, Pt, Si, Ni, Cu, C, Ti, and Cr, or materials containing them. Specific examples include Cr-N, Ge, Ge-In, Ge-Ga, Ge-P, Pt, Pt-In, Cu, Ni-C, Si, Ti-C-O, and the like. By adjusting the film thickness T of the resistor 30 made of any of these materials, it is possible to obtain a desired transverse sensitivity ratio.

In other words, by forming the resistor 30 from any of these materials, it is possible to realize a strain gauge having a gauge factor that is 5 or greater and is not dependent on the film thickness of the resistor 30, and having a transverse sensitivity ratio that has a negative correlation with the film thickness of the resistor 30 and decreases as the film thickness of the resistor 30 increases.

[Example 2]

The inventors manufactured, per film thickness, a plurality of strain gauge samples having the same specifications as in Example 1, and investigated the relationship between the film thickness of the resistor and the strain limit. Here, the types of film thickness of the resistor were 1,100 nm, 800 nm, 500 nm, 200 nm, 100 nm, 50 nm, and 30 nm.

FIG. 6 is a drawing showing the results of consideration in Example 2, and plots the minimum value of the strain limit of the plurality of strain gauge samples per film thickness. As shown in FIG. 6, the strain limit has a negative correlation with the film thickness T of the resistor 30, and tends to decrease as the film thickness T of the resistor 30 increases. In particular, in the range of the film thickness T of the resistor 30 of 30 nm or greater 200 nm or less, the strain limit greatly decreases. On the other hand, at a film thickness T of the resistor 30 of greater than 200 nm, the strain limit mildly decreases.

In actual use of the strain gauge 1, there may be a case where a strain limit of approximately $6,000 \times 10^{-6}$ is required. Therefore, from the results of FIG. 6, it can be regarded as preferable for the resistor 30 to have a film thickness T that is equal to or less than 800 nm to ensure a strain limit of $6,000 \times 10^{-6}$ or greater.

The strain gauge 1 is pasted on a flexure element and extends and contracts by following the movement of the flexure element, to thereby detect the amount of strain of the flexure element. Therefore, in order to detect a greater amount of strain, the strain gauge 1 itself should not undergo breakage (disconnection of lines, or the like) in the process of extension and contraction, and a greater strain limit is required. In the strain gauge 1, it is possible to improve the strain limit by adjusting the film thickness T of the resistor 30 to 800 nm or less.

Although a polyimide resin is used as the substrate 10 in Example 2, the characteristics shown in FIG. 6 are not dependent on the material of the substrate 10. For example, when a material other than resins is used as the substrate 10, the same characteristics as shown in FIG. 6 can be obtained.

Moreover, when other materials are used instead of the Cr mixed phase film, the same characteristics as shown in FIG. 6 can be obtained. Examples of other materials include Ge, Pt, Si, Ni, Cu, C, Ti, Cr, or materials containing these. Specific examples include Cr-N, Ge, Ge-In, Ge-Ga, Ge-P, Pt, Pt-In, Cu, Ni-C, Si, Ti-C-O, and the like.

[Suitable Range of Film Thickness T of Resistor 30]

From the results of Example 1, from the viewpoint of the transverse sensitivity ratio and the gauge factor, it is preferable to adjust the film thickness T of the resistor 30 to 200 nm or greater. Thus, a strain gauge in which the film thickness T of the resistor 30 is adjusted to 200 nm or greater such that the strain gauge has a transverse sensitivity ratio of 70% or less and a gauge factor of 5 or greater can be realized. It is possible to improve the accuracy of strain detection with this strain gauge.

Furthermore, from the result of Example 2, when focusing on the strain limit, it is preferable to adjust the film thickness T of the resistor 30 to 800 nm or less. Therefore, considering the result of Example 1 in view of the result of Example 2, it is more preferable to adjust the film thickness T of the resistor 30 to 200 nm or greater and 800 nm or less. Thus, it is possible to realize a strain gauge in which the film thickness T of the resistor 30 is adjusted 200 nm or greater and 800 nm or less such that the strain gauge has a transverse sensitivity ratio of 70% or less, a gauge factor of 5 or greater, and a strain limit of $6,000 \times 10^{-6}$ or greater. With this strain gauge, it is possible to improve the accuracy of strain detection and to detect a greater amount of strain.

Depending on the required specifications, there may be a case where the strain limit may be less than $6,000 \times 10^{-6}$. Therefore, it is not indispensable to adjust the film thickness T of the resistor 30 to 800 nm or less.

Preferred embodiments and other particulars have been described in detail. However, the strain gauge according to the disclosure is not limited to the embodiments, modifications, and the like described above. For example, various modifications and replacements are applicable to the strain gauge according to the embodiments and other particulars described above without departing from the scope described in the claims.

This international application claims priority based on Japanese Patent Application No. 2022-123522 filed August 2, 2022, and the entire contents of Japanese Patent Application No. 2022-123522 are incorporated in this international application.

REFERENCE SIGNS LIST

1, 1A, 1B: strain gauge, 10: substrate, 10a: upper surface, 20: functional layer, 30: resistor, $30e_1$, $30e_2$: end, 40: line, 50: electrode, 60: cover layer, 100: flexure element

**Claims**

1. A strain gauge, comprising:

   a substrate; and
   a resistor formed on the substrate,
   wherein the resistor is made of a material mainly composed of Cr, and
   a film thickness of the resistor is 200 nm or greater such that the strain gauge has a transverse sensitivity ratio of 70% or less and a gauge factor 5 or greater.

2. The strain gauge according to claim 1,
   wherein the resistor has a film thickness of 200 nm or greater and 800 nm or less such that the strain gauge has the transverse sensitivity ratio of 70% or less, the gauge factor of 5 or greater, and a strain limit of $6,000 \times 10^{-6}$ or greater.

3. The strain gauge according to claim 2,
   wherein the strain limit has a negative correlation with the film thickness of the resistor, and decreases as the film thickness of the resistor increases.

4. The strain gauge according to any one of claims 1 to 3,

   wherein the gauge factor is not dependent on the film thickness of the resistor, and
   the transverse sensitivity ratio has a negative correlation with the film thickness of the resistor and decreases as the film thickness of the resistor increases.

5. The strain gauge according to any one of claims 1 to 4,
   wherein the resistor is formed of a film containing Cr, CrN, and $Cr_2N$.

# FIG.1

# FIG.2

# FIG.3

1

20    30    60

T

10    10a

# FIG.4

M

1B

1A

N                                    N

100

z
y

x

M

# FIG.5

# FIG.6

## INTERNATIONAL SEARCH REPORT

| International application No. |
| --- |
| **PCT/JP2023/027714** |

| A. | CLASSIFICATION OF SUBJECT MATTER |
| --- | --- |

*G01B 7/16*(2006.01)i
FI:  G01B7/16 R

According to International Patent Classification (IPC) or to both national classification and IPC

| B. | FIELDS SEARCHED |
| --- | --- |

Minimum documentation searched (classification system followed by classification symbols)

G01B7/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2003-035506 A (HONDA MOTOR CO LTD, TOYOTA MOTOR CORP) 07 February 2003 (2003-02-07)<br>entire text, all drawings | 1-5 |
| A | JP 2021-025782 A (MINEBEAMITSUMI INC) 22 February 2021 (2021-02-22)<br>paragraphs [0023]-[0028] | 1-5 |
| A | JP 2021-181936 A (RES INSTITUTE FOR ELECTROMAGNETIC MATERIALS, SHINKAWA SENSOR TECH INC) 25 November 2021 (2021-11-25)<br>paragraphs [0005], [0008], [0009] | 1-5 |
| A | WO 2021/200693 A1 (MINEBEAMITSUMI INC) 07 October 2021 (2021-10-07)<br>entire text, all drawings | 1-5 |
| A | WO 2022/154057 A1 (MINEBEAMITSUMI INC) 21 July 2022 (2022-07-21)<br>entire text, all drawings | 1-5 |

| ☐ Further documents are listed in the continuation of Box C. | ☑ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **25 September 2023** | **10 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/027714**

| Patent document cited in search report | | | Publication date (day/month/year) | Patent family member(s) | Publication date (day/month/year) |
|---|---|---|---|---|---|
| JP | 2003-035506 | A | 07 February 2003 | (Family: none) | |
| JP | 2021-025782 | A | 22 February 2021 | (Family: none) | |
| JP | 2021-181936 | A | 25 November 2021 | (Family: none) | |
| WO | 2021/200693 | A1 | 07 October 2021 | US 2023/0147031 A1 whole document | |
| WO | 2022/154057 | A1 | 21 July 2022 | (Family: none) | |

Form PCT/ISA/210 (patent family annex) (January 2015)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6084393 B

- JP 2022123522 A

**Non-patent literature cited in the description**

- Isotropy of Gauge Factor on Cr-N Thin Films for Strain Sensors. 2013 National Competition, Lecture Paper Collection. The institute of Electrical engineers of Japan, 2013, vol. 3, 240-241